(19) Europäisches Patentamt
European Patent Office
Office européen des brevets

(11) Publication number: **0 261 979 B1**

(12) **EUROPEAN PATENT SPECIFICATION**

(45) Date of publication of patent specification: **29.06.94**

(51) Int. Cl.[5]: **C08G 59/06**, C08L 63/02, C09D 163/02

(21) Application number: **87308494.1**

(22) Date of filing: **25.09.87**

The file contains technical information submitted after the application was filed and not included in this specification

(54) **Coating compositions.**

(30) Priority: **26.09.86 JP 227479/86**

(43) Date of publication of application: **30.03.88 Bulletin 88/13**

(45) Publication of the grant of the patent: **29.06.94 Bulletin 94/26**

(84) Designated Contracting States: **DE FR GB IT NL**

(56) References cited:
**EP-A- 0 060 581**
**EP-A- 0 260 571**
**US-A- 4 327 132**
**US-A- 4 535 103**

**WPIL, FILE SUPPLIER, AN=84-254566, Derwent Publications Ltd, London, GB;& JP-A-59 155 473**

**WPIL, FILE SUPPLIER, AN=85-044204, Derwent Publications Ltd, London, GB;& JP-A-60 047 015**

(73) Proprietor: **MITSUI PETROCHEMICAL INDUSTRIES, LTD.**
**2-5, Kasumigaseki 3-chome**
**Chiyoda-ku**
**Tokyo 100(JP)**

(72) Inventor: **Iizuka, Hiroshi**
**1170-21 Nakatakane**
**Ichihara-shi Chiba(JP)**
Inventor: **Iwata, Tadao**
**4-27-C-19, 912 Shiinazaki-cho**
**Chiba-shi Chiba(JP)**
Inventor: **Ishiwata, Shuichi**
**12-14 Aobadai 5-chome**
**Ichihara-shi Chiba(JP)**

(74) Representative: **Myerscough, Philip Boyd et al**
**J.A.KEMP & CO.**
**14, South Square**
**Gray's Inn**
**London WC1R 5LX (GB)**

EP 0 261 979 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**WPIL, FILE SUPPLIER, AN=87-231950, Derwent Publications Ltd, London, GB; & JP-A-62 155 979**

**Ullmanns Encyklopädie der technischen Chemie, 4. Aufl., 1974, Band 7, p. 380**

**Römpps Chemie-Lexikon, 8. Auflage, 1981, p. 1158-1159**

## Description

This invention relates to coating compositions and more particularly to epoxy resin type coating materials suitable for lining hot water piping and the like.

Heretofore, Bisphenol A type epoxy resins have been used mainly as surface covering coating materials for corrosion protection or surface protection purposes. Generally, these bisphenol A type epoxy resins are used in coating compositions after adjusting viscosity of the resulting coating compositions by the addition to said resins of reactive diluents, plasticizers and solvents according to the purpose for which the coating compositions are used and the coating process employed therefor. As curing agents used in such coating compositions referred to above, there are used generally polyamideamine resins, modified polyamine resins, polyamide resins or mixtures thereof.

In the coating compositions conventionally comprising such components as mentioned above, however, there are involved such problems as will be described herein below.

(a) Most of the cured products obtained have a glass transition temperature of less than 70 °C (almost all the cured products obtained have a glass transition temperature from 30 ° to 60 °C) and, for this reason, such cured products, when used as coating materials for structure members which are exposed to fluids having a temperature higher than 60 °C such as hot water, are found insufficient in corrosion resistance and adhesive properties, and thus they are hardly fit for use.

(b) Where the cured products obtained are brought into contact with, for example, hot water of from 60 °C to 90 °C, a large amount of the organic constituents present in the cured products are leached, and thus the cured products are limited in their uses from the standpoint of safety.

(c) Ascribable to crystallization of the Bisphenol A type epoxy resins, coating compositions comprising said resins, when stored, tend to solidify and thus an economical disadvantage is brought about from the standpoint of storability of the coating compositions.

The present invention is intended to solve such problems associated with the prior art as mentioned above, and an object of the invention is to provide coating compositions which exhibit excellent heat resistance, particularly erosion resistance to hot water, excellent adhesive properties and excellent resistance to leaching of organic constituents contained in the compositions and, at the same time, exhibit excellent coating properties.

The coating compositions of the present invention comprise an epoxy resin obtainable from Bisphenol AD and, as a curing agent, epoxy resin-modified isophorone diamine, epoxy resin-modified 3,3'-dimethyl-4,4'-dicyclohexylaminomethane or epoxy resin-modified m-xylenediamine.

The coating compositions of the invention contain the epoxy resin derivable from Bisphenol AD in place of conventional Bisphenol A type epoxy resins, and therefore the coatings of the invention obtainable by curing the coating compositions exhibit a high glass transition temperature, and also excellent hot water resistance, adhesive strength and coating properties. For instance, the inner surface of pipes can be coated with the coatings as linings by the two phase (air/liquid) flow coating technique.

The coating compositions of the present invention are illustrated below in detail.

In the coating compositions of the invention, there is used as a resin component at least one epoxy resin obtainable from 1,1-bis(hydroxyphenyl)ethane as Bisphenol represented by the following formula

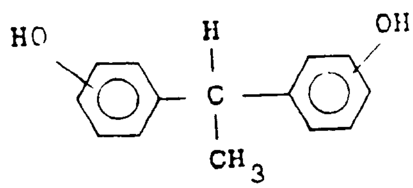

(Bisphenol AD)

Such a Bisphenol may be obtained by condensation of acetaldehyde with phenol in the presence of acid, and processes for the production of the Bisphenol are well known hitherto.

Usually, Bisphenol AD is obtained as a mixture containing about 75 mol% of Bisphenol having hydroxyl groups at the p- and p'- positions.

The epoxy resin used in the present invention is obtainable by polycondensation of Bisphenol AD with epichlorohydrin.

The Bisphenol AD type epoxy resin may be formed by a reaction represented by the following reaction scheme:

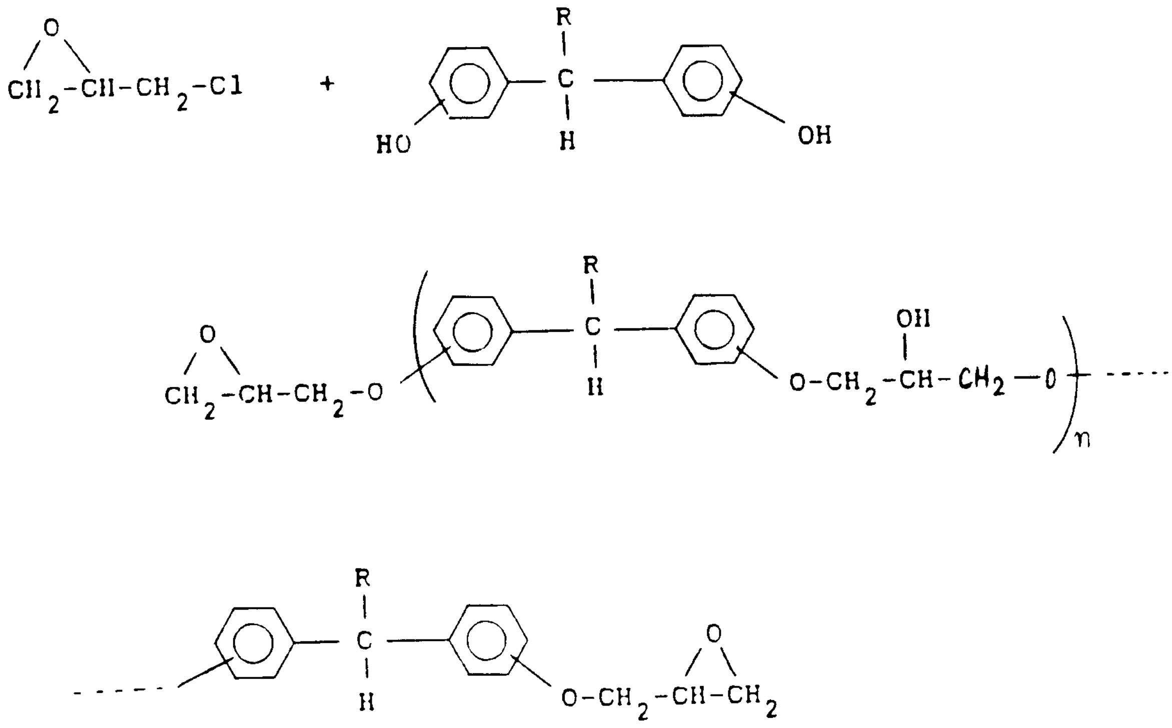

wherein R represents methyl.

The Bisphenol AD type epoxy resin preferably has an EEW (epoxy equivalent weight) from 165 to 185.

In addition to Bisphenol AD type epoxy resins, conventionally known epoxy resins can also be used in the epoxy resin component of the present invention in combination therewith. Preferably usable known epoxy resins are Bisphenol A type epoxy resins having an EEW of from 185 to 195.
orthocresolnovolak type epoxy resins having an EEW of from 210 to 240, trimethylolpropane triglycidyl ethers having an EEW of from 130 to 145 and mixtures thereof.

The epoxy resins used in the present invention comprising as an essential component a Bisphenol AD type epoxy resin preferably have a viscosity of less than 10 Pas (100 poises) at 25 °C. The epoxy resins of the invention may further be incorporated with small amounts of polyfunctional reactive diluents and, in this case, the diluents are preferably used in such an amount that the resulting cured product will not come to have a glass transition temperature of below 90 °C.

The epoxy resins mentioned above are desirably used in the coating compositions of the present invention in an amount of from 25 to 85% by weight, preferably from 35 to 75% by weight.

The curing agents used in the coating compositions of the present invention are epoxy resin-modified amine type compounds preferably having a viscosity of less than 10 Pas (100 poises) at 25 °C.

Such curing agents are desirably used in the coating compositions in an amount of from 8 to 40% by weight, preferably from 15 to 33% by weight. Viewed at another angle, such curing agents are preferably used in such a manner that active hydrogen present in the coating compositions is from 0.8 to 1.6, more preferably from 0.8 to 1.2 based on one equivalent of the epoxy group.

Into the curing agents, less than 20% by weight, based on the weight of the curing agent, of plasticizers may be incorporated.

The coating compositions of the present invention may be further incorporated with extender pigments or coloring pigments, or both.

Preferably usable as the extender pigments are inorganic powder materials having a true specific gravity of from 0.3 to 4.5 g/cm$^3$, an oil absorption of at least 11 ml/100g, and an average particle diameter of less than 10µm. Such inorganic powder materials include calcium carbonate, magnesium carbonate, silica, silica alumina, glass powder, glass beads, asbestos, mica, graphite, barium sulfate, aluminum hydroxide, talc, kaolin, acid clay, activated clay, bentonite, diatomaceous earth, montmorillonite and dolomite. Of those exemplified above, particularly preferred are calcium carbonate, silica, barium sulfate, talc and kaolin.

Preferably usable as the coloring pigments are inorganic and organic fine powder materials having a specific gravity of less than 5.7 g/$cm^3$ and an average particle diameter of less than 1 μm. Usable inorganic coloring pigments include titanium oxide, zinc white, carbon black, iron oxide red, cadmium red, titanium yellow, chrome oxide green, cobalt green, ultramarine, Prussian blue, cobalt blue, cerulean blue, cobalt violet, and usable organic coloring pigments include permanent red, Hansa yellow, benzidine yellow, lake red, phthalocyanine blue and phthalocyanine green. Of the coloring pigments exemplified above, particularly preferred are titanium oxide, ultramarine, cobalt blue, phthalocyanine blue, phthalocyanine green, chrome oxide green, titanium yellow and iron oxide red.

Furthermore, the coating compositions of the present invention may be incorporated, if necessary, with such additives as defoamers, leveling agents and thioxotropic agents, or additional components such as polyfunctional reactive diluents and curing accelerators.

The coating compositions of the present invention may be formed as two-part liquid compositions. For instance, the epoxy resin, extender pigment and/or coloring pigment may be kneaded together to prepare a main composition, and the curing agent, extender pigment and/or coloring pigment may be kneaded together to prepare a curing agent composition. By mixing the main composition with the curing agent composition, a curable coating composition may be prepared whenever it is used.

The curing of the coating compositions of the present invention is usually carried out at a temperature of above 5 °C, preferably from 10 ° to 95 °C.

Cured products obtained by curing the coating compositions of the present invention have a glass transition temperature from 80 ° to 150 °C, and hence they are fit for use as coatings for lining of hot water piping.

Application of the coating compositions of the present invention to a substrate, for example, the inner surface of a pipe, may be effected by spraying the compositions over the inner surface by means of fluids (gases). For instance, lining of the inner surface of a pipe with the coating compositions of the present invention may be performed while spraying the compositions with compressed air at a gas flow velocity of at least 20 m/sec (in terms of standard condition employed) and blowing the compositions through inside the pipe.

The present invention is illustrated below with reference to Examples, but it should be construed that the invention is in no way limited thereto.

Example 1

A main ingredient composition and a curing agent composition having the respective compositions as indicated below were prepared and mixed together to obtain a coating composition according to the present invention.

Main ingredient composition:

A mixture of 100 parts of Bisphenol AD type epoxy resin (viscosity 3 Pas/25 °C (30 poises/25 °C), epoxy equivalent weight 165-185), 18 parts of talc, 13 parts of titanium oxide and 1.5 parts of an additive was kneaded with a triple roll mill to obtain a main ingredient composition.

Curing agent composition:

A mixture of 100 parts of epoxy resin-modified isophorone diamine (viscosity 4.7 Pas/25 °C (47 poises/25 °C), active hydrogen equivalent 83), 20 parts of talc and 10 parts of titanium oxide as extender pigments, 0.7 part of ultramarine as a coloring pigment and 1.9 parts of an additive was kneaded with a triple roll mill to obtain a curing agent composition.

In preparing the coating composition of the present invention, the thus obtained main ingredient and curing agent compositions were mixed together in the proportion of 100 parts to 50 parts.

Example 2

A main ingredient composition and a curing agent composition having their respective compositions as indicated below were prepared and mixed together to obtain a coating composition according to the present invention.

Main ingredient composition:

Same as in Example 1.

Curing agent composition:

A mixture of 100 parts of epoxy resin-modified 3,3'-dimethyl-4,4'-dicyclohexyl amino methane (viscosity 4.2 Pas/25°C (42 poises/25°C), active hydrogen equivalent 71), 54.4 parts of barium sulfate as an extender pigment, 0.7 part of ultramarine as a coloring pigment and 1.9 parts of an additive was kneaded with a triple roll mill to obtain a curing agent composition.

In preparing the coating composition of the present invention, the thus obtained main ingredient and curing agent compositions were mixed together in the proportion of 100 parts to 50 parts.

Example 3

A main ingredient composition and a curing agent composition having their respective compositions as indicated below were prepared and mixed together to obtain a coating composition according to the present invention.

Main ingredient composition:

A mixture of 100 parts of Bisphenol AD type epoxy resin (viscosity 3 Pas/25°C (30 poises/25°C), EEW 165-185), 42.8 parts of novolak type epoxy resin (EEW 174), 7.2 parts of trimethylolpropane triglycidyl ether (EEW 139), 29 parts of talc and 20 parts of titanium oxide as extender pigments, and 2 parts of an additive was kneaded with a triple roll mill to obtain a main ingredient composition.

Curing agent composition:

Same as in Example 2.

In preparing the coating composition of the present invention, the thus obtained main ingredient and curing agent compositions were mixed together in the proportion of 100 parts to 50 parts.

Example 4

A main ingredient composition and a curing agent composition having their respective compositions as indicated below were prepared and mixed together to obtain a coating composition according to the present invention.

Main ingredient composition:

A mixture of 100 parts of Bisphenol AD type epoxy resin (viscosity 3 Pas/25°C (30 poises/25°C), EEW 165-185), 25 parts of orthocresol novolak type epoxy resin (EEW 226), 13.6 parts of polyepichlorohydrin diglycidyl ether (polychloromethylethyleneglycol diglycidyl ether) (EEW 147), 26.5 parts of talc and 18.3 parts of titanium oxide as extender pigments, and 1.5 parts of an additive was kneaded with a triple roll mill to obtain a main ingredient composition.

Curing agent composition:

Same as in Example 2.

In preparing the coating composition of the present invention, the thus obtained main ingredient and curing agent compositions were mixed together in the proportion of 100 parts to 50 parts.

Comparative Example 1

The procedure of Example 1 was repeated with the sole exception that Bisphenol F type epoxy resin (Bisphenol F glycidyl ether, viscosity 3 Pas/25°C (30 poises/25°C), epoxy equivalent weight 173) was used in place of the Bisphenol AD type epoxy resin used in the main ingredient composition.

Comparative Example 2

The procedure of Example 2 was repeated with the sole exception that Bisphenol F type epoxy resin was used in place of the Bisphenol AD type epoxy resin.

Comparative Example 3

The procedure of Example 3 was repeated with the sole exception that Bisphenol F type epoxy resin was used in place of the Bisphenol AD type epoxy resin.

Comparative Example 4

A main ingredient composition and a curing agent composition having their respective compositions as indicated below were prepared and mixed together to obtain a coating composition.

Main ingredient composition:

A mixture of 100 parts of Bisphenol A type epoxy resin (EEW 185-195), 11 parts of butylglycidyl ether (EEW 138), 20 parts of talc arid 14.8 parts of titanium oxide as extender pigments, and 22 parts of an additive was kneaded to obtain a main ingredient composition.

Curing agent composition:

A mixture of 100 parts of modified aromatic polyamine (active hydrogen equivalent 100-120), 15 parts of talc as an extender pigment, 5 parts of ultramarine as a coloring pigment, and 5 parts of an additive was kneaded with a triple roll mill to obtain a curing agent composition.

In preparing the coating composition, the thus obtained main ingredient and curing agent compositions were mixed together in the proportion of 100 parts to 50 parts.

Comparative Example 5

A main ingredient composition and a curing agent composition having their respective compositions as indicated below were prepared and mixed together to obtain a coating composition.

Main ingredient composition:

A mixture of 100 parts of Bisphenol A type epoxy resin (EEW 185-195), 11.1 parts of butylglycidyl ether (EEW 138), 27.8 parts of tetraglycidyldiaminomethyl cyclohexane (EEW 108), 10.8 parts of silica powder and 4.6 parts of titanium oxide was kneaded to obtain a main ingredient composition.

Curing agent composition:

A mixture of 100 parts of epoxy-modified isophorone diamine (semi-solid state, active hydrogen equivalent 86), 80 parts of benzyl alcohol, 7 parts of silica powder and 13 parts of iron oxide red was kneaded to obtain a curing agent composition.

In preparing the coating composition, the thus obtained main ingredient and curing agent compositions were mixed together in the proportion of 100 parts to 97 parts.

Test Example

The coating compositions obtained in the foregoing Examples 1-4 and Comparative Examples 1-5, respectively, were subjected to tests as indicated in Table 1 that follows.

In this connection, measurement conditions under which each test was conducted are as follows:

(1) Values of the glass transition temperature were determined by measurement of the formed coatings with DSC (a differential scanning calorimeter), wherein each composition was coated on a polyethylene terephthalate sheet to a thickness of about 200 µm, allowed to stand for 2 days at room temperature, and cured for 1 hour at 90 °C to obtain a coating thereon.

(2) A test specimen used in the pencil hardness, isothermal immersion and differential temperature water resistance tests, respectively, was prepared by coating around the surfaces of a steel grit blast-treated steel plate (75 mm x 150 mm x 2 mm) with each coating composition. The steel plate thus coated was allowed to stand for 2 days at room temperature and then subjected to curing for 1 hour at 90°C. The composition was coated on the steel plate to a dry film thickness of 400 µm.

(a) The pencil hardness test was conducted in accordance with the procedure stipulated in JIS K5400, 6, 14, directed to the pencil hardness test.

(b) The isothermal immersion test was conducted by hanging down each test specimen into boiling pure water, wherein the coating formed on the specimen was examined as to the presence of blistering and rusting occurred thereon, according to the evaluation standard of coating (compiled by Paint Inspection Association).

(c) The differential temperature water resistance test was conducted by placing both surfaces of each test specimen on two different temperature sides, one on a high temperature side while contacting with boiling pure water, and the other on a low temperature side contacting with atmosphere, wherein the presence of blistering and rusting occurred on the surface of the coating placed on the high temperature was examined side according to the evaluation standard of coating (compiled by Paint Inspection Association).

(3) The adhesion test was conducted by using a steel plate (75 mm x 150 mm x 9 mm) cleaned with a solvent, steel grit blasted and coated on the surface with each coating composition, and a steel columnary member (an outside diameter 20 mm) steel grit blasted on the surface to be bonded to the coated surface of the steel plate, wherein said member was bonded to the surface of said steel plate, allowed to stand for 2 days at room temperature and subjected to curing for 1 hour at 90°C, and thereafter the coating formed around the member was removed with a cutter knife, and the adhesion strength of the member to the steel plate was measured by means of a tension tester (manufactured and sold by Toyo Baldwin).

(4) The amount of organic matters migrated was measured after curing for 2 days the coating composition which had been coated on an inner surface of a steel pipe of a nominal diameter of 2 nm (20Å) after sand blast treatment with air flowing at a gas flow velocity of 100 m/sec.

(a) Total Organic Carbon (TOC) was obtained by measurement with a TOC tester (manufactured and sold by Shimadzu Seisakusho Ltd.) of water obtained by sealing in at 90°C within inside the steel tube after cleaning the inner surface thereof with water heated to 90°C and keeping the sealed water for 1 hour at 90°C.

(b) Consumption of potassium permanganate was obtained by measurement, according to the test of Ministerial Ordinance No. 56 of the Ministry of Public Welfare, of water obtained by sealing in at 90°C within inside the steel tube after cleaning the inner surface thereof with water heated to 90°C, and then allowing the sealed water to stand for 24 hours in atmosphere (however, the value as measured was represented by a difference between the tested water and control water). Amine was measured according to the method of JWWA K-115(Japan Waterworks Association) by testing the water used in the potassium permanganate consumption test.

The results obtained in the above test are shown in the following Table 1.

Table 1

| Item | Glass transition temperature | Pencil hardness (JIS K5400) | | Immersion test | | Adhesion Strength | | Amount of migrated organic matter | | |
|---|---|---|---|---|---|---|---|---|---|---|
| | | | | Isothermal boiling water | Differential temperature water resistance | | | TOC | Consumption of potassium permanganate | Amine |
| | (°C) | 20°C | 100°C | 4 months | 1 month | (Kg/cm²) 20°C | 100°C | (ml/l) | (mg/l) | |
| Example 1 | 96 | 2H | H | no visible change | no visible change | 222 | 93 | less than 5 | less than 1 | undetectable |
| Example 2 | 116 | 2H | H | no visible change | no visible change | 184 | 210 | less than 5 | less than 1 | undetectable |
| Example 3 | 96 | 2H | H | no visible change | no visible change | 175 | 95 | less than 5 | less than 1 | undetectable |
| Example 4 | 93 | 2H | F | no visible change | No visible change | 164 | 90 | less than 5 | less than 1 | undetectable |
| Comparative Example 4 | 75 | H | less than 6B | 71 days 8L | 7 days 8L | 184 | 18 | 145 | 13 | undetectable |
| Comparative Example 5 | 68 | 2H | less than 6B | 65 days 8L | 7 days 8L | 170 | 15 | 350 | 15 | undetectable |
| Comparative Example 1 | 92 | 2H | H | no visible change | no visible change | 218 | 90 | less than 5 | less than 1 | undetectable |
| Comparative Example 2 | 110 | 2H | H | no visible change | no visible change | 190 | 185 | less than 5 | less than 1 | undetectable |
| Comparative Example 3 | 92 | 2H | H | no visible change | no visible change | 164 | 86 | less than 5 | less than 1 | undetectable |

As is clear front the results shown in Table 1 above, all the coatings obtained from the coating compositions according to examples of the present invention have a glass transition temperature of higher than 90 °C, and the coating compositions of the present invention give excellent results when subjected to

the pencil hardness test and immersion test, as compared with the prior art coating compositions and, moreover, are excellent in adhesive properties at elevated temperatures as well as in resistance to leaching of organic components.

As evidenced by the results obtained in the foregoing Examples and Comparative Examples, the cured products obtained from the coating compositions of the present invention exhibit a high glass transition temperature, and also excellent hot water resistance, adhesive properties and coating properties, since the compositions contain, as the resin component thereof, epoxy resins obtained from the starting specific bisphenols.

## Claims

1. A coating composition comprising an epoxy resin obtainable from Bisphenol AD and, as an amine type curing agent, epoxy resin-modified isophorone diamine, epoxy resin-modified 3,3'-dimethyl-4,4'-dicyclohexylaminomethane or epoxy resin-modified m-xylenediamine.

2. A composition according to claim 1 wherein the epoxy resin is obtainable by reaction of Bisphenol AD with epichlorohydrin.

3. A composition according to claim 1 or 2 wherein the amount of the epoxy resin is from 25 to 80% by weight.

4. A composition according to claim 1, 2 or 3 wherein the curing agent has a viscosity of less than 10 Pas (100 Poises) at 25 ° C.

5. A composition according to any one of the preceding claims which further contains an extender pigment and/or a colourising pigment.

6. A composition comprising the cured product of a composition as claimed in any one of the preceding claims.

7. A process for coating an inner wall surface of a pipe with a composition as claimed in any one of claims 1 to 5, which process comprises introducing the composition into the pipe with a flowing gas flow velocity of at least 20 m/sec, thereby to coat the inner wall surface of said pipe with said composition and blow residual composition through the pipe.

8. A process according to claim 7 wherein the coating on the inner wall surface is subsequently cured.

9. A hot water pipe having an inner lining obtainable by coating the inner surface of the pipe with a composition as claimed in any one of claims 1 to 5 and curing the coating.

## Patentansprüche

1. Überzugsmasse, umfassend ein Epoxyharz, das erhältlich ist aus Bisphenol AD und, als Härtungsmittel vom Amintyp durch Epoxyharz modifiziertes Isophorondiamin, durch Epoxyharz modifiziertes 3,3'-Dimethyl-4,4'-dicyclohexylaminomethan oder durch Epoxyharz modifiziertes m-Xyloldiamin.

2. Masse nach Anspruch 1, wobei das Epoxyharz erhältlich ist durch Umsetzung von Bisphenol AD mit Epichlorhydrin.

3. Masse nach Anspruch 1 oder 2, wobei die Menge an dem Epoxyharz 25 bis 80 Gew.-% beträgt.

4. Masse nach Anspruch 1, 2 oder 3, wobei das Härtungsmittel eine Viskosität von weniger als 10 Pa•s (100 Poises) bei 25 ° C besitzt.

5. Masse nach einem der vorangehenden Ansprüche, die ferner ein Streckpigment und/oder ein färbendes Pigment enthält.

6. Masse, umfassend das gehärtete Produkt einer Masse nach einem der vorangehenden Ansprüche.

7. Verfahren zum Überziehen einer Innenwand eines Rohrs mit einer Masse nach einem der Ansprüche 1 bis 5, wobei das Verfahren umfaßt das Einführen der Masse in das Rohr mit einer Fließgeschwindigkeit für ein strömendes Gas von mindestens 20 m/s, wodurch die Innenwand des Rohrs mit der Masse überzogen und restliche Masse durch das Rohr geblasen wird.

8. Verfahren nach Anspruch 7, wobei der Überzug auf der Innenwand anschließend gehärtet wird.

9. Heißwasserrohr mit einer Innenauskleidung, erhältlich durch Überziehen der Innenwand des Rohrs mit einer Masse nach einem der Ansprüche 1 bis 5 und Härten des Überzugs.

**Revendications**

1. Composition pour revêtements comprenant une résine époxy qui peut être préparée à partir du bisphénol AD et d'un agent durcissant de type amine tel que l'isophorone diamine modifiée par une résine époxy, le 3,3'-diméthyl-4,4'-dicyclohéxylaminométhane modifié par une résine époxy ou la m-xylènediamine modifiée par une résine époxy.

2. Composition conforme à la revendication 1, dans laquelle la résine époxy peut être obtenue par réaction du bisphénol AD avec l'épichlorhydrine.

3. Composition conforme à la revendication 1 ou 2, dans laquelle la quantité de résine époxy est comprise entre 25 et 80 % en poids.

4. Composition conforme aux revendications 1, 2 ou 3, dans laquelle l'agent de durcissement a une viscosité inférieure à 10 Pa.s (100 poises) à 25 °C.

5. Composition conforme à une des revendications précédentes contenant en outre un pigment de charge et/ou un pigment colorant.

6. Composition comprenant le produit durci d'une composition conforme à une des revendications précédentes.

7. Procédé d'enduction de la surface de la paroi interne d'un tuyau avec une composition conforme à une des revendications 1 à 5, le procédé comprenant l'introduction de la composition dans le tuyau avec une vitesse d'écoulement du flux gazeux d'au moins 20 m/sec, enduisant ainsi la surface de la paroi interne dudit tuyau avec ladite composition et soufflant les restes de la composition à travers le tuyau.

8. Procédé conforme à la revendication 7, dans lequel le revêtement sur la surface de la paroi interne est ensuite durci.

9. Canalisation d'eau chaude à revêtement interne pouvant être obtenue par enduction de la surface interne du tuyau avec une composition conforme à une des revendications 1 à 5, suivie du durcissement du revêtement.